# EUROPEAN PATENT APPLICATION

(11) **EP 2 755 116 A1**
(43) Date of publication of application: **16.07.2014**
(21) Application number: 13150919.2
(22) Date of filing: 11.01.2013
(51) Int. Cl.: G06F 3/038, G06F 3/0354

(54) **Method and apparatus pertaining to pre-associated stylus-input user preferences**

(71) Applicant: BlackBerry Limited, Waterloo, ON N2K 0A7 (CA)
(72) Inventor: Mankowski, Peter, Waterloo, Ontario N2L 3W8 (CA); Mercea, Cornel, Waterloo, Ontario N2L 3W8 (CA); Wu, Xiaowei, Waterloo, Ontario N2L 3W8 (CA)
(74) Representative: Bryn-Jacobsen, Caelia

(57) **Abstract**

A control circuit stores profiles of stylus-input user preferences and pre-associates individual ones of those profiles with corresponding different applications. Upon opening one of those applications the control circuit then automatically uses the corresponding pre-associated stylus-input user preferences. So configured, a user's specific preferences regarding how the control circuit will render electronic ink on a display in response to stylus-based input are automatically utilized on an application-by-application basis without requiring the user to access and change global settings for stylus input.

## Description

### Field of Technology

The present disclosure relates to styli employed as a user interface to a corresponding electronic device.

### Background

Various styli are known and typically serve in conjunction with a scribing surface that is configured to work with a corresponding stylus. Generally speaking, a stylus is typically a hand-held writing utensil that often (but not exclusively) has a pencil-like elongated form factor and that includes at least one pointed end configured to interact with the scribing surface. Using a stylus as an input mechanism with, for example, a display offers a variety of advantages over a fingertip including the opportunity for increased precision as well as an expression modality that accords with the user's own past experience with a pencil or pen.

That said, however, a given user may desire at least some control over how the electronic device makes use of stylus input. For example, when using a pressure-sensitive stylus that transmits information to the electronic device regarding an amount of pressure being exerted by the user while scribing with the stylus the user may wish for the corresponding electronic ink rendered by the electronic device to have a line width that can vary as a function of that sensed pressure. In particular, the user may have a specific wish that the line have a first width when applying a first pressure and a second, different width when applying a second pressure.

It is known in the art to allow the user to access a "settings" capability or the like (typically via a menu-based user interface) to globally calibrate their electronic device to react in desired ways to stylus input. The number and type of stylus-input user preferences that a given electronic device can accommodate will vary but will otherwise constitute global settings that apply across all applications for that electronic device unless and until changed by the user via the aforementioned settings opportunity.

While suitable for some purposes, the aforementioned approach presents unwanted constraints and time-of-need overhead requirements for at least some users. In such cases the user's productivity can be unduly hampered and their satisfaction with the stylus-based user-input paradigm reduced.

### Brief Description of the Drawings

FIG. 1 is a flow diagram in accordance with the disclosure.

FIG. 2 is a block diagram in accordance with the disclosure.

FIG. 3 is a schematic representation of a screen shot in accordance with the disclosure.

FIG. 4 is a perspective view in accordance with the disclosure.

FIG. 5 is a perspective view in accordance with the disclosure.

FIG. 6 is a perspective view in accordance with the disclosure.

### Detailed Description

The following describes an apparatus and method pertaining to a control circuit configured to store profiles of stylus-input user preferences and to pre-associate individual ones of those profiles with corresponding different applications. Upon opening one of those applications the control circuit then automatically uses the corresponding pre-associated stylus-input user preferences. So configured, a user's specific preferences regarding how the control circuit will render electronic ink on a display in response to stylus-based input can be automatically utilized on an application-by-application basis without requiring the user to access and change global settings for stylus input.

These teachings are highly flexible and scalable in practice. For example, the stylus-input user preferences can include any of a wide variety of preferences. By one approach, for example, the stylus-input user preferences can comprise user preferences regarding dynamic responses to stylus scribing pressure. These dynamic responses can include, by way of non-limiting examples, particular rendered line thicknesses, rendered line colors, rendered line opacity, and so forth as a function of stylus scribing pressure.

So configured, a user's expectations regarding a manner of expression to be achieved via a stylus on an application-by-application basis are more readily and conveniently met. Satisfying these expectations, in turn, can help the user to better achieve their goals and purpose in employing a stylus in a way that frees the user from thinking about how to do what they want to do and concentrating instead upon simply doing what they want to do.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

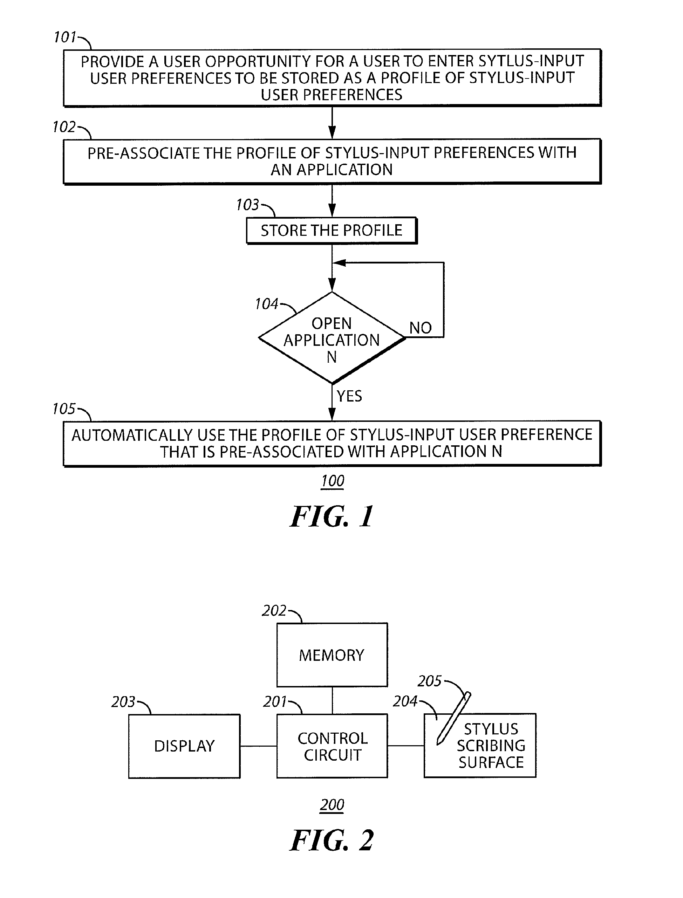

FIG. 1 presents an illustrative example of a process 100 that accords with many of these teachings. In many useful application settings a control circuit of choice carries out the process 100. Referring momentarily to FIG. 2, such a control circuit 201 can comprise a part of an electronic device 200 such as a portable electronic device 200. Examples in these regards include but are certainly not limited to so-called smartphones and tablet/pad-based computers.

Such a control circuit 201 can comprise a fixed-purpose hard-wired platform or can comprise a partially or wholly programmable platform. These architectural options are well known and understood in the art and require no further description here. This control circuit 201 is configured (for example, by using corresponding programming as will be well understood by those skilled in the art) to carry out one or more of the steps, actions, and/or functions described herein.

In this illustrative example the control circuit 201 operably couples to a memory 202. The memory 202 may be integral to the control circuit 201 or can be physically discrete (in whole or in part) from the control circuit 201 as desired. This memory 202 can serve, for example, to non-transitorily store the computer instructions that, when executed by the control circuit 201, cause the control circuit 201 to behave as described herein. (As used herein, this reference to "non-transitorily" will be understood to refer to a non-ephemeral state for the stored contents (and hence excludes when the stored contents merely constitute signals or waves) rather than volatility of the storage media itself and hence includes both non-volatile memory (such as read-only memory (ROM) as well as volatile memory (such as an erasable programmable read-only memory (EPROM).)

In this illustrative example the control circuit 201 also operably couples to a display 203 and a stylus scribing surface 204. The present teachings will readily accommodate using a display that can double as the stylus scribing surface 204 but such a configuration is a not a requirement. Numerous display technologies are known in the art as are stylus scribing surfaces and the manner by which a stylus's location and movement can be detected and tracked. As the present teachings are not overly sensitive to any particular choices in these regards, further elaboration will not be provided here for the sake of brevity and clarity.

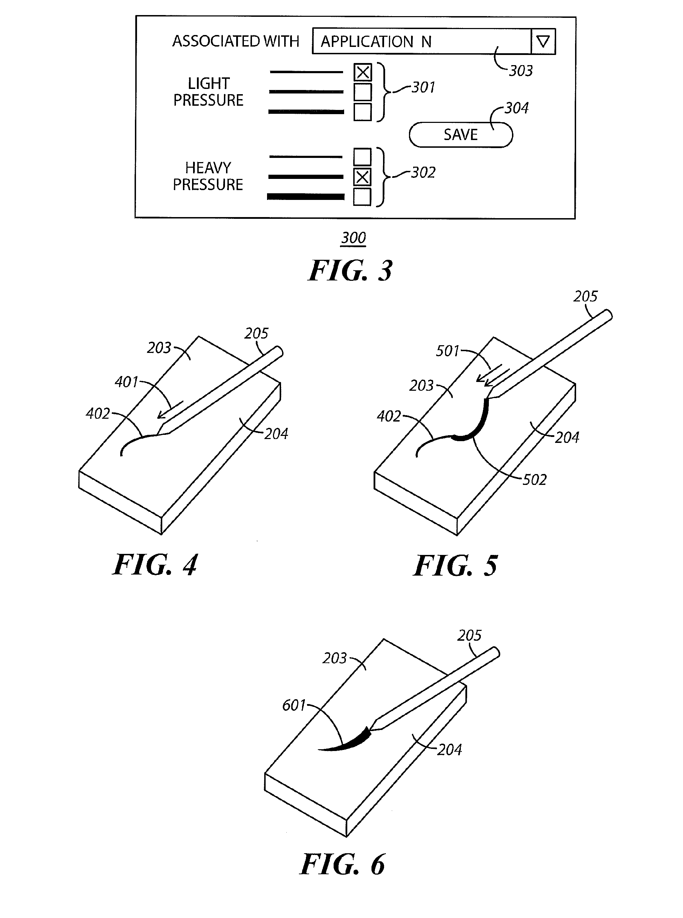

Referring to FIGS. 1 and 3, at 101 the control circuit 201 provides a user opportunity for a user to enter stylus-input user preferences to be stored as a profile of stylus-input user preferences. This user opportunity can assume any of a variety of forms. In this illustrative example the user opportunity at least includes a menu-accessed window 300 having a plurality of stylus-input user preference fields (though for the sake of simplicity and clarity only two such fields are shown here). At 301 the user has the opportunity to designate a particular rendered electronic ink link thickness when the user applies light pressure while scribing with the stylus 205. Similarly, at 302, the user has the opportunity to again designate a particular rendered electronic ink link thickness when the user applies heavy pressure while scribing with the stylus 205.

In this illustrative example the user has selected different line thicknesses to correspond to two different ranges of pressure (i.e., a light range of pressures and a heavy range of pressures). These teachings will accommodate, however, allowing the user to select identical line thicknesses notwithstanding the application of different pressures.

By one approach, if desired, some or all of these stylus-input user preference fields can be pre-populated with default selections which the user can then change as desired. Or, in lieu of the forgoing, some or all of these fields can be blank to thereby invite the user to make corresponding selections.

At 102 of the process 100 and at 303 as shown in FIG. 3 the user associates the various stylus-input user preference selections with a given application. (If desired, the control circuit 201 can also accommodate a global setting capability for use with applications for which the user has not made application-specific pre-associations.) By selecting these preferences and making this association with a particular application a priori, these teachings thereby provide for pre-associating a collection of stylus-input user preferences (and hence a profile of such preferences) with a given specified application.

At 103 of the process 100 and via a "save" button 304 in this illustrative example the control circuit 201 saves the profile and its pre-association with the designated application.

The word "profile" is sometimes used in the prior art to refer to a profile of the input data itself to facilitate determining whether, for example, detected content is in fact intended stylus movement content. As used herein the expression stylus-input user preferences is not intended to include such data discrimination content. That said, however, those skilled in the art will understand and appreciate that the present teachings will accommodate a wide range of stylus-input user preferences. Examples include but are not limited to varying line widths, varying line colors, varying line opacity, varying line continuity (dashed lines versus continuous lines, for example), designating discretely variable line thicknesses versus continuously-variable line thicknesses, designating a line type (such as a pencil-type line, a fountain pen-type line, a brush-type line, and so forth), and so forth.

Those skilled in the art will also recognize and understand that there are various ways by which the user can be afforded the opportunity to enter stylus-input user preferences and/or to pre-associate such preferences with a given application other than via the particular illustrative example described above. As one example in these regards a wizard process can serve to walk the user through a step-by-step process to carry out the selection and pre-association process.

As another example, if desired, this process 100 can be rendered transparent to the user. In this case, the control circuit 201 can take note of real-time changes the user makes to stylus-input settings while using a given application and automatically store those settings as uniquely applying to the given application instead of storing those settings as global settings to be applied across all applications.

At 104 the control circuit 201 detects the opening of a given application (here, "application N"). In response, at 105 the control circuit 201 automatically uses the profile of stylus-input user preferences that were previously pre-associated with this particular application. Accordingly, as the user uses the stylus 205 the displayed rendering of electronic ink that corresponds to the stylus input will be based upon those pre-associated stylus-input user preferences.

FIGS. 4 and 5 provide one simple example in these regards. In this example the pre-associated stylus-input user preferences for the presently-open application specify using a first line width when the user employs light pressure and a second, thicker line width when the user employs heavy pressure. In FIG. 4 the user is applying light pressure 401 and hence the control circuit 201 renders the corresponding electronic ink line 402 using that first line width preference. In FIG. 5, the user switches to applying heavy pressure 501 and hence the control circuit 201 now renders the corresponding electronic ink line 502 using the second, thicker line width.

In FIG. 6, the user has opened a different application than the application exemplified in FIGS. 4 and 5. In this example the stylus-input user preferences that are pre-associated with this different application specify using a rendered electronic ink line width that is continuously variable as a function of the pressure being applied by the user while scribing with the stylus 205. Accordingly the rendered electronic ink line 601 has a continuously variable line width that corresponds to the user's application of a continuously-variable pressure while scribing.

A typical prior art approach would require the user to open a configuration menu at the time of need to cause the control circuit 201 to behave as described above for the two examples of FIGS. 4-6. Per the present teachings, however, the desired preferences are automatically and transparently applied at the time of need.

The present teachings are highly scalable and will accommodate a wide number of different applications, preferences, and even stylus types. In fact, the greater the number of supported applications and preferences the greater the benefits of applying the present teachings.

The present disclosure may be embodied in other specific forms without departing from its essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. A method comprising:
by a control circuit (201):
storing a first profile of stylus-input user preferences;
storing at least a second profile of stylus-input user preferences;
pre-associating (102) the first profile of stylus-input user preferences with a first application;
pre-associating (102) the second profile of stylus-input user preferences with a second application;
automatically using (105) the first profile of stylus-input user preferences when using the first application;
automatically using (105) the second profile of stylus (205)-user preferences when using the second application.

2. The method of claim 1 wherein the stylus-input user preferences correspond, at least in part, to user preferences regarding dynamic responses to stylus (205) scribing pressure.

3. The method of claim 2 wherein the stylus-input user preferences include, at least in part, associating a particular stylus (205) scribing pressure with at least one of:
a particular rendered line thickness;
a particular rendered line color;
a particular rendered line opacity.

4. The method of claim 2 wherein the stylus (205) scribing pressure comprises at least one range of stylus (205) scribing pressures.

5. The method of claim 1 further comprising:
providing (101) a user opportunity for a user to enter the stylus-input user preferences to be stored as the first profile of stylus-input user preferences;
providing (101) a user opportunity for a user to enter the stylus-input user preferences to be stored as the second profile of stylus-input user preferences.

6. An apparatus comprising:
a stylus scribing surface (204);
a display (203);
a control circuit (201) operably coupled to the stylus scribing surface (204) and the display (203), the control circuit (201) being configured to:
store a first profile of stylus-input user preferences;
store at least a second profile of stylus-input user preferences;
pre-associate (102) the first profile of stylus-input user preferences with a first application;
pre-associate (102) the second profile of stylus-input user preferences with a second application;
automatically use (105) the first profile of stylus-input user preferences when using the first application;
automatically use (105) the second profile of stylus-user preferences when using the second application.

7. The apparatus of claim 6 wherein the stylus-input user preferences correspond, at least in part, to user preferences regarding dynamic responses to stylus (205) scribing pressure.

8. The apparatus of claim 7 wherein the stylus-input user preferences include, at least in part, associating a particular stylus (205) scribing pressure with at least one of:
a particular rendered line thickness;
a particular rendered line color;
a particular rendered line opacity.

9. The apparatus of claim 7 wherein the stylus (205) scribing pressure comprises at least one range of stylus (205) scribing pressures.

10. The apparatus of claim 9 wherein the control circuit (201) is further configured to:
provide (101) a user opportunity for a user to enter the stylus-input user preferences to be stored as the first profile of stylus-input user preferences;
provide (101) a user opportunity for a user to enter the stylus-input user preferences to be stored as the second profile of stylus-input user preferences.

11. A non-transitory memory (202) having computer instructions stored therein which, when executed by a processor, cause the processor to:
store a first profile of stylus-input user preferences;
store at least a second profile of stylus-input user preferences;
pre-associate (102) the first profile of stylus-input user preferences with a first application;
pre-associate (102) the second profile of stylus-input user preferences with a second application;
automatically use (105) the first profile of stylus-input user preferences when using the first application;
automatically use (105) the second profile of stylus-user preferences when using the second application.
